# EUROPÄISCHE PATENTSCHRIFT

(11) **EP 0 682 617 B1**
(45) Veröffentlichungstag und Bekanntmachung des Hinweises auf die Patenterteilung: **18.09.1996**
(21) Anmeldenummer: 94906904.1
(22) Anmeldetag: 05.02.1994
(51) Int. Cl.: B62D 5/08

(54) **HILFSKRAFTLENKUNG, INSBESONDERE FÜR KRAFTFAHRZEUGE**
SERVO STEERING UNIT, ESPECIALLY FOR MOTOR VEHICLES
DIRECTION ASSISTEE, EN PARTICULIER POUR DES VEHICULES A MOTEUR

(30) Priorität: 10.02.1993 DE 4303854
(43) Veröffentlichungstag der Anmeldung: 22.11.1995
(73) Patentinhaber: ZF FRIEDRICHSHAFEN Aktiengesellschaft, D-88038 Friedrichshafen (DE)
(72) Erfinder: LANG, Armin, D-73529 Schwäbisch Gmünd (DE)
(86) Internationale Anmeldenummer: EP9400326
(87) Internationale Veröffentlichungsnummer: WO9418051

(56) Entgegenhaltungen:
- WO-A-85/01924
- DE-A- 4 126 020
- GB-A- 662 724
- US-A- 3 750 836

## Beschreibung

Die Erfindung betrifft eine Hilfskraftlenkung, insbesondere für Kraftfahrzeuge, nach dem Oberbegriff des Anspruches 1. Die Hilfskraftlenkung enthält ein Lenkventil, das zwei Einlaß-Sitzventile und zwei Auslaß-Sitzventile aufweist, deren Schließkörper über Betätigungsstößel in Abhängigkeit von einer Drehbewegung einer Lenkspindel verschiebbar sind. Dabei sind die Schließkörper der Einlaß-Sitzventile durch die Kraft von Druckfedern in Schließrichtung beaufschlagbar, so daß die Einlaß-Sitzventile in der Neutralstellung des Lenkventils geschlossen sind. Die Auslaß-Sitzventile sind in der Neutralstellung des Lenkventils geöffnet. Die Einlaß-Sitzventile werden erst nach dem Schließen des jeweiligen zugehörigen Auslaß-Sitzventils geöffnet.

Eine derartige Hilfskraftlenkung ist bekannt aus der älteren deutschen Patentanmeldung P 41 26 020.1. Bei dieser Hilfskraftlenkung kann der federbelastete Schließkörper des Einlaß-Sitzventils mit Hilfe einer Anschlagscheibe entlastet werden. Dadurch wird verhindert, daß zum Öffnen des Einlaß-Sitzventils eine größere Betätigungskraft erforderlich ist als zum Öffnen des Auslaß-Sitzventils.

Um die beschriebene Wirkung zu erzielen, ist eine sehr sorgfältige Abstimmung zweier Betätigungsabstände erforderlich. Ein erster Abstand zwischen einem Betätigungsstößel und der Anschlagscheibe muß dabei kleiner sein als ein zweiter Abstand zwischen der Schließfläche eines Schließkörpers des Auslaß-Sitzventils und einem Ventilsitz des Auslaß-Sitzventils, der an dem Schließkörper des Einlaß-Sitzventils angeordnet ist. Da die Betätigungswege der Sitzventile im Bereich von einigen Zehntel Millimetern liegen, ist die Abstimmung sehr schwierig. Bei dieser Hilfskraftlenkung ist außerdem beim Beginn der Verstellung des Lenkventils aus der Neutralstellung heraus zunächst nur eine Zentrierfeder wirksam. Erst nach Überwinden des ersten Abstandes bis zur Anlage des Betätigungsstößels an der Anschlagscheibe wird die Vorspannkraft der auf den Schließkörper des Einlaß-Sitzventils wirkenden Druckfeder erhöht. Diese Folge widerspricht der allgemein bei Lenkventilen bestehenden Forderung nach einer erhöhten Steifigkeit der Lenkung in der Mittellage.

Der Erfindung liegt die Aufgabe zugrunde, eine gattungsgemäße Hilfskraftlenkung derart zu verbessern, daß zwar ihre Vorteile erhalten bleiben, die oben beschriebenen Nachteile jedoch vermieden werden. Insbesondere soll die Abstimmung der Betätigungsfolge der Einlaß- und Auslaß-Sitzventile erleichtert werden. Ebenso soll vermieden werden, daß mit zunehmender Verstellung des Lenkventils die Zentrierkraft erhöht wird.

Diese Aufgabe wird durch die im Anspruch 1 gekennzeichnete Hilfskraftlenkung gelöst. Die Lösung erfolgt insbesondere dadurch, daß sich die Druckfedern beider Einlaß-Sitzventile einerseits an den Betätigungsstößeln und andererseits ständig an den Schließkörpern abstützen. Außerdem sollen die Druckfedern derart ausgelegt sein, daß sie in Neutralstellung des Lenkventils eine Schließkraft auf die Schließkörper ausüben und daß bei einer Verstellung des Lenkventils aus seiner Neutralstellung heraus jeweils eine Druckfeder dann nur noch kräftefrei an dem Schließkörper anliegt, sobald das zugehörige Auslaß-Sitzventil geschlossen ist.

Zweckmäßige und vorteilhafte Ausgestaltungen der Erfindung sind in den Unteransprüchen angegeben.

Für eine besonders gute Abstimmung ist es vorteilhaft, Druckfedern mit sehr hoher Federrate zu verwenden. Dies läßt sich besonders günstig verwirklichen, wenn die Druckfedern als Tellerfedern ausgeführt sind. Wird der Betätigungsstößel zweiteilig ausgebildet, so kann der Teil, an dem die Tellerfeder anliegt, so weit in den anderen Teil eingepreßt werden, bis die gewünschte Vorspannung der Tellerfeder zwischen dem Betätigungsstößel und dem Schließkörper des Einlaß-Sitzventils erreicht ist. Dadurch lassen sich die erforderlichen Toleranzen leicht erreichen.

Im folgenden wird die Erfindung anhand dreier in der Zeichnung dargestellter Ausführungsbeispiele näher erläutert. Wegen der einfachen Darstellung wird die Erfindung anhand einer Zahnstangen-Hilfskraftlenkung beschrieben. Die Erfindung ist jedoch auch für andere Hilfskraftlenkungen, beispielsweise Kugelmutter-Hilfskraftlenkungen, anwendbar. Es zeigen:
- Fig. 1, 3 und 4: Längsschnitte durch die erfindungsgemäße Hilfskraftlenkung in drei Ausführungsbeispielen;
- Fig. 2: einen Teil-Querschnitt durch die Hilfskraftlenkung im Bereich des einen Teils des Lenkventils nach dem Ausführungsbeispiel der Fig. 1.

In einem Lenkgehäuse 1 ist ein Ritzel 2 in zwei Lagern 3 und 4 drehbar gelagert. Das Ritzel 2 trägt an seinem einen Ende einen Lenkspindelanschluß 5 für den Anschluß an ein Lenkorgan, beispielsweise eine nicht dargestellte Lenkspindel mit einem Lenkhandrad. Eines der Lager, vorzugsweise das Lager 3, das in der Nähe des Lenkspindelanschlusses 5 liegt, ist als Festlager ausgebildet. Das andere Lager, vorzugsweise das Lager 4, das dem Lenkspindelanschluß 5 abgewandt ist, ist als Loslager ausgebildet. Das Ritzel 2 steht über seine Verzahnung in Eingriff mit einer Zahnstange 6, die in dem Lenkgehäuse 1 axial verschiebbar geführt ist. Der Außenring 7 des Lagers 4 ist in dem Lenkgehäuse 1 derart geführt, daß er sich entsprechend der Bewegung des unteren Teiles des Ritzels 2 senkrecht zu dessen Achse reibungsarm bewegen kann. Die Bedeutung dieser Bewegung wird im weiteren Verlauf der Beschreibung erklärt werden.

Zur Steuerung des von einer nicht dargestellten Servopumpe geförderten und zweckmäßigerweise in einem Speicher gespeicherten Druckmittels zu und von den Druckräumen eines nicht dargestellten Servomotors dient ein Lenkventil 8, das zwei Einlaß-Sitzventile 10 und 11 und zwei Auslaß-Sitzventile 12 und 13 enthält. Die Einlaß- und Auslaß-Sitzventile 10, 11, 12, 13 sind im wesentlichen senkrecht zur Achse des Ritzels 2 im Bereich des Loslagers 4 angeordnet. Dabei sind jeweils ein Einlaß-Sitzventil 10 bzw. 11 und ein Auslaß-Sitzventil 12 bzw. 13 koaxial zueinander angeordnet.

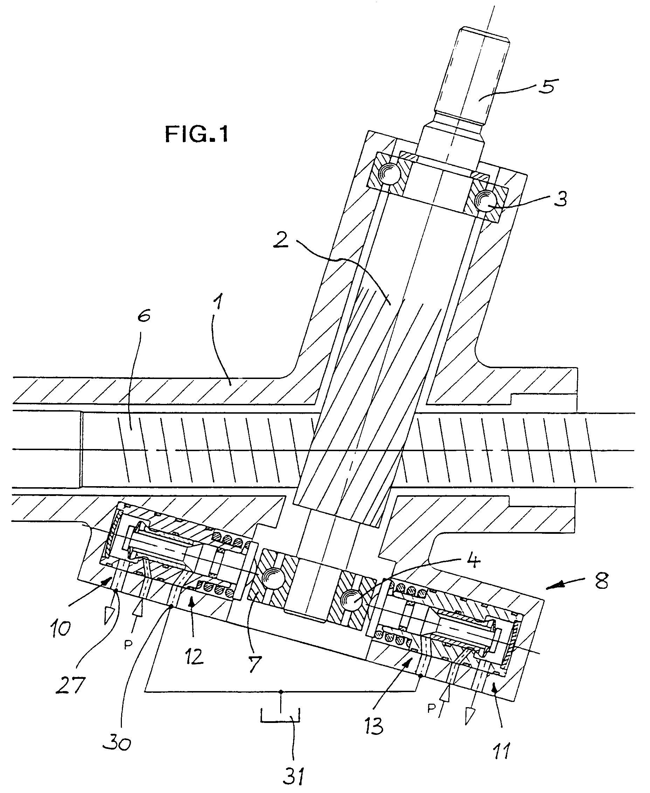

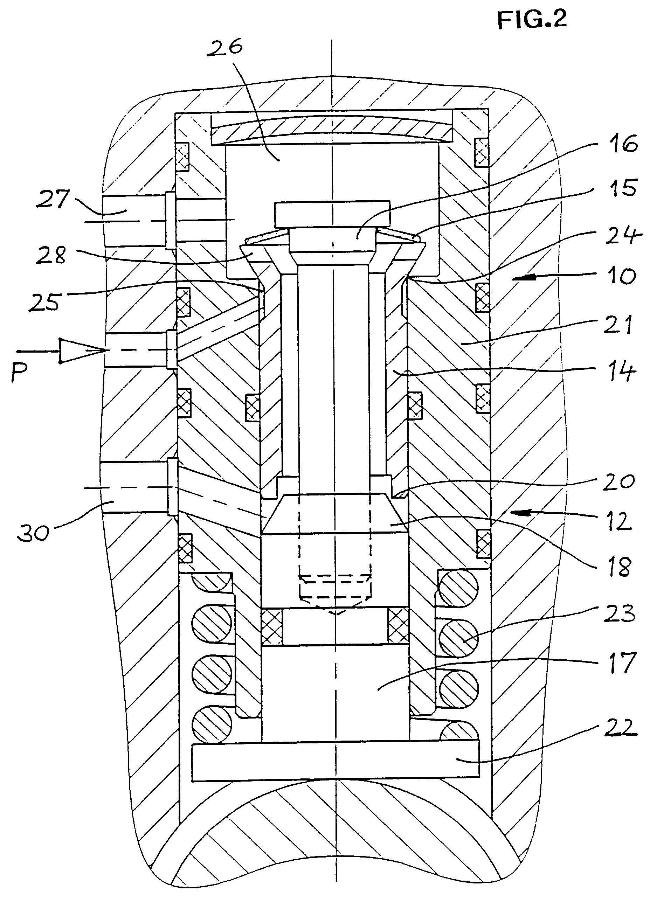

Die beiden Teile des Lenkventils 8 mit je einem Einlaß-Sitzventil 10 bzw. 11 und je einem Auslaß-Sitzventil 12 bzw. 13 sind im wesentlichen gleich ausgebildet. Der genauere Aufbau des Lenkventils 8 wird deshalb im folgenden anhand nur eines Teiles - in Fig. 1 der linke Teil - des Lenkventils 8 mit dem Einlaß-Sitzventil 10 und dem Auslaß-Sitzventil 12 anhand des in Fig. 2 dargestellten, vergrößerten Ausschnittes beschrieben.

In der Neutralstellung des Lenkventils 8 ist das Einlaß-Sitzventil 10 geschlossen. Dies wird dadurch erreicht, daß dessen Schließkörper 14 durch die Kraft einer Druckfeder 15 in der Form einer Tellerfeder in Schließrichtung beaufschlagbar ist. Die Druckfeder 15 stützt sich einerseits an dem Schließkörper 14 und andererseits an einem Teil 16 eines Betätigungsstößels 17 ab. Der Teil 16 des Betätigungsstößels 17 geht durch eine Bohrung des Schließkörpers 14 hindurch und ist an dem eigentlichen Betätigungsstößel 17 befestigt. Die Befestigung erfolgt beispielsweise durch Einpressen des Teiles 16 in eine Bohrung des Betätigungsstößels 17, wie dies weiter unten näher beschrieben wird. An dem Betätigungsstößel 17 ist ein Schließkörper 18 des Auslaß-Sitzventils 12 ausgebildet, der mit einem an dem Schließkörper 14 angeordneten Ventilsitz 20 zusammenwirkt. Zwischen einem mit dem Lenkgehäuse 1 fest verbundenen Ventileinsatz 21 und einem Bund 22 des Betätigungsstößels 17 ist eine Zentrierfeder 23 eingespannt. Durch die Zentrierfeder 23 und die Druckfeder 15 wird der Schließkörper 14 des Einlaß-Sitzventils 10 gegen einen gehäusefesten Ventilsitz 24 gedrückt. Der Ventilsitz 24 ist beispielsweise an dem gehäusefesten Ventileinsatz 21 ausgebildet.

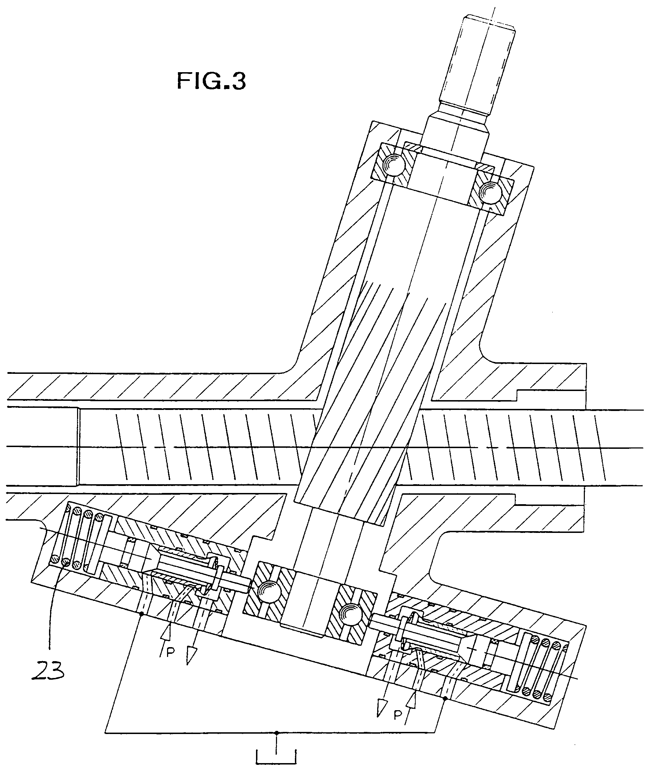

Zur Versorgung der Lenkung mit von der Servopumpe gefördertem Druckmittel ist ein Zulaufanschluß vorgesehen, der in Fig. 1 und 3 zur Vereinfachung der Darstellung in zwei Zulaufanschlüsse aufgeteilt ist, die in der Zeichnung mit P bezeichnet sind. Der Zulaufanschluß P steht über entsprechende Kanäle mit einer Zulaufkammer 25 in Verbindung, die an dem Einlaß-Sitzventil 10 angeordnet ist. Eine Kammer 26, die in der Neutralstellung des Lenkventils 8 von der Zulaufkammer 25 getrennt ist, steht mit einem Zylinderanschluß 27 in Verbindung. Außerdem ist die Kammer 26 über Durchbrüche 28 in dem Schließkörper 14 mit einem Rücklaufanschluß 30 und damit mit einem Druckmittelbehälter 31 verbunden.

Im folgenden wird die Funktion der erfindungsgemäßen Hilfskraftlenkung beschrieben: Wird durch eine Drehung des nicht dargestellten Lenkhandrades das Ritzel 2 beispielsweise im Sinne einer Rechtsdrehung gedreht, so wälzt sich die Verzahnung des Ritzels 2 zunächst an der Verzahnung der momentan noch feststehenden Zahnstange 6 ab. Dadurch wird das Ritzel 2 um das Festlager 3 um einen sehr geringen Winkel geschwenkt. Das Loslager 4 wird nach links verschoben. Diese Bewegung wird über den Außenring 7 des Loslagers 4 auf den Betätigungsstößel 17 und damit auf den Schließkörper 18 des Auslaß-Sitzventils 12 übertragen. Der Schließkörper 18 wird in Fig. 2 so lange nach oben bewegt, bis er an dem Ventilsitz 20 anliegt und damit die Verbindung von dem Zylinderanschluß 27 zum Druckmittelbehälter 31 unterbrochen ist. Diese Bewegung erfolgt gegen die Kraft der Zentrierfeder 23. Bis zu diesem Punkt der Bewegung wirkt die Druckfeder 15 auf den Schließkörper 14 des Einlaß-Sitzventils 10, so daß dieses geschlossen bleibt. Die Druckfeder 15 ist in ihrer Federkraft und in ihrer Einbaulage derart ausgelegt, daß sie in der Neutralstellung des Lenkventils 8 eine Schließkraft auf den Schließkörper 14 ausübt, daß diese Schließkraft mit zunehmender Bewegung des Betätigungsstößels 17 abnimmt und daß die Druckfeder 15 in dem Augenblick, in dem der Schließkörper 18 an dem Ventilsitz 20 dichtend anstößt, nur noch kräftefrei an dem Schließkörper 14 anliegt. Bei der weiteren Bewegung des Betätigungsstößels 17 wird sich deshalb der Schließkörper 14 von seinem Ventilsitz 24 abheben, so daß eine Verbindung hergestellt wird von dem Zulaufanschluß P über die Zulaufkammer 25 und die Kammer 26 zu dem Zylinderanschluß 27. Dort wird ein entsprechender Druck aufgebaut, der in bekannter Weise im Sinne einer hydraulischen Rückwirkung der Betätigungskraft an dem Betätigungsstößel 17 die Waage hält.

Aus dieser Funktionsbeschreibung wird deutlich, daß bei der erfindungsgemäßen Hilfskraftlenkung anstelle der bisher gegebenen plötzlichen Entlastung des Schließkörpers eine stetige Entlastung erfolgt und damit der gewünschte Verlauf der Zentrierkraftkurve erreicht wird.

Da der Betätigungsstößel 17 mit dem Teil 16 aus zwei Teilen besteht, ist es möglich, bei der Montage der in dem Ventileinsatz 21 vormontierbaren Ventileinheit die Kraft der Druckfeder 15 sehr genau einzustellen, indem der Teil 16 in den eigentlichen Betätigungsstößel 17 unter Berücksichtigung der Toleranzen so weit eingepreßt wird, daß die Tellerfeder beim Schließen des Auslaß-Sitzventils 20 an dem Bund des Teiles 16 und an dem Schließkörper 14 ohne Vorspannung anliegt und damit in der Neutralstellung des Lenkventils 8 die gewünschte Vorspannung der Tellerfeder erreicht wird.

Werden die Ventileinheiten umgekehrt eingebaut, wie dies in Fig. 3 dargestellt ist, d. h. wird der Betätigungsstößel 16, 17 nicht auf der Seite des Auslaß-Sitzventiles, sondern auf der Seite des Einlaß-Sitzventiles von dem Außenring 7 des Lagers 4 her bewegt, so ergibt sich der Vorteil, daß die Zentrierfeder 23 gleichzeitig als Druckbegrenzungsfeder wirksam ist.

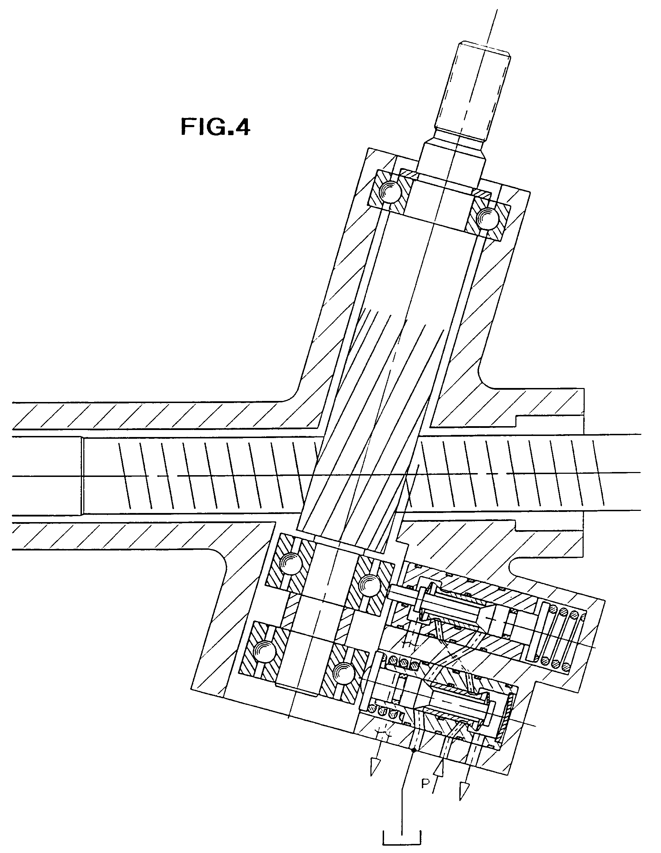

Aus Einbaugründen, d. h. bei besonderen vorgegebenen Raumverhältnissen, ist auch eine gemischte Lösung der Anordnungen aus Fig. 1 und Fig. 3 möglich, wie dies in Fig. 4 dargestellt ist.

In den drei Ausführungsbeispielen erfolgt die Betätigung des Lenkventils 8 durch die Querbewegung des Ritzels 2. Mit gleicher Wirkung und gleichen Vorteilen ist es jedoch auch möglich, das Lenkventil 8 in zwei Ventilteilen parallel zum Ritzel 2 anzuordnen und über eine entsprechende Mitnahmescheibe zu betätigen, wie dies in der älteren deutschen Patentanmeldung P 41 26 020.1 prinzipiell angegeben ist. Ein solcher Einbau, bei dem die axiale Bewegung eines Lenkgetriebeeingangsgliedes, in diesem Fall des Ritzels, zur Betätigung des Lenkventils benutzt wird, ist auch möglich bei anderen Lenkgetrieben, beispielsweise bei einer Kugelmutter-Hilfskraftlenkung.

### Bezugszeichen

- 1: Lenkgehäuse
- 2: Ritzel
- 3: Lager
- 4: Lager
- 5: Lenkspindelanschluß
- 6: Zahnstange
- 7: Außenring
- 8: Lenkventil
- 9: -
- 10: Einlaß-Sitzventil
- 11: Einlaß-Sitzventil
- 12: Auslaß-Sitzventil
- 13: Auslaß-Sitzventil
- 14: Schließkörper
- 15: Druckfeder (Tellerfeder)
- 16: Teil von 17
- 17: Betätigungsstößel
- 18: Schließkörper
- 19: -
- 20: Ventilsitz
- 21: Ventileinsatz
- 22: Bund
- 23: Zentrierfeder
- 24: Ventilsitz
- 25: Zulaufkammer
- 26: Kammer
- 27: Zylinderanschluß
- 28: Durchbruch
- 29: -
- 30: Rücklaufanschluß
- 31: Druckmittelbehälter
- P: Zulaufanschluß

## Patentansprüche

1. Hilfskraftlenkung, insbesondere für Kraftfahrzeuge, mit einem Lenkventil (8), das zwei Einlaß-Sitzventile (10, 11) und zwei Auslaß-Sitzventile (12, 13) aufweist, deren Schließkörper (14, 18) über Betätigungsstößel (16, 17) in Abhängigkeit von einer Drehbewegung einer Lenkspindel verschiebbar sind,
wobei die Schließkörper (14) der Einlaß-Sitzventile (10, 11) durch die Kraft von Druckfedern (15) in Schließrichtung beaufschlagbar und dadurch in der Neutralstellung des Lenkventils (8) geschlossen sind,
wobei die Auslaß-Sitzventile (12, 13) in der Neutralstellung des Lenkventils (8) geöffnet sind und
wobei die Einlaß-Sitzventile (10, 11) erst nach dem Schließen des jeweiligen zugehörigen Auslaß-Sitzventils (12, 13) geöffnet werden,
dadurch **gekennzeichnet,**
- daß sich die Druckfedern (15) beider Einlaß-Sitzventile (10, 11) einerseits an den Betätigungsstößeln (16, 17) und andererseits ständig an den Schließkörpern (14) abstützen und
- daß die Druckfedern (15) derart ausgelegt sind, daß sie in Neutralstellung des Lenkventils (8) eine Schließkraft auf die Schließkörper (14) ausüben und daß bei einer Verstellung des Lenkventils (8) aus seiner Neutralstellung heraus jeweils eine Druckfeder (15) dann kräftefrei an dem Schließkörper (14) anliegt, sobald das zugehörige Auslaß-Sitzventil (12, 13) geschlossen ist.

2. Hilfskraftlenkung nach Anspruch 1, dadurch **gekennzeichnet,** daß die Druckfedern (15) als Tellerfedern ausgeführt sind.

3. Hilfskraftlenkung nach Anspruch 2, dadurch **gekennzeichnet,** daß der Betätigungsstößel (16, 17) zweiteilig ausgebildet ist und daß sein einer Teil (16), an dem die Tellerfeder anliegt, so weit in den anderen Teil (17) eingepreßt wird, bis in der Neutralstellung des Lenkventils (8) die gewünschte Vorspannung der Tellerfeder erreicht ist.

## Claims

1. Power-assisted steering, in particular for motor vehicles, having a steering valve (8), which comprises two inlet seat valves (10, 11) and two outlet seat valves (12, 13), the closing bodies (14, 18) of which are displaceable by means of actuating plungers (16, 17) in dependence upon a rotary motion of a steering shaft,
wherein the closing bodies (14) of the inlet seat valves (10, 11) are loadable in closing direction by pressure springs (15) and are therefore closed in the neutral position of the steering valve (8),
wherein the outlet seat valves (12, 13) are open in the neutral position of the steering valve (8) and
wherein the inlet seat valves (10, 11) are opened only after closure of the respective associated outlet seat valve (12, 13),
characterized in
- that the pressure springs (15) of both inlet seat valves (10, 11) are supported on the one hand on the actuating plungers (16, 17) and on the other hand permanently on the closing bodies (14) and
- that the pressure springs (15) are so designed that, in the neutral position of the steering valve (8), they exert a closing force upon the closing bodies (14) and that, upon a shift of the steering valve (8) out of its neutral position, in each case one pressure spring (15) lies in a force-free manner against the closing body (14) as soon as the associated outlet seat valve (12, 13) is closed.

2. Power-assisted steering according to claim 1, characterized in that the pressure springs (15) take the form of cup springs.

3. Power-assisted steering according to claim 2, characterized in that the actuating plunger (16, 17) is of a two-part construction and that its one part (16), against which the cup spring lies, is pressed far enough into the other part (17) to achieve the desired bias of the cup spring in the neutral position of the steering valve (8).

## Revendications

1. Direction assistée, en particulier pour des véhicules à moteur, comportant une soupape de direction (8) pourvue de deux soupapes d'alimentation à sièges (10, 11) et de deux soupapes d'échappement à sièges (12, 13) dont les organes de fermeture (14, 18) peuvent être coulissés au moyen de poussoirs d'activation (16, 17) en fonction d'un déplacement d'un axe de direction,
dans laquelle les organes de fermeture (14) des soupapes d'alimentation à sièges (10, 11) sont sollicités dans le sens de la fermeture par la force d'un ressort de compression (15) et sont de ce fait verrouillés dans la position neutre de la soupape de direction (8),
dans laquelle les soupapes d'échappement à sièges (12, 13) sont ouvertes dans la position neutre de la soupape de direction (8) et
dans laquelle les soupapes d'alimentation à sièges (10, 11) ne s'ouvrent qu'après la fermeture des soupapes d'alimentation à sièges (12, 13) correspondantes,
caractérisé
- en ce que le ressort de compression (15) des deux soupapes d'alimentation à sièges (10, 11) sont en appui permanent d'une part contre les poussoirs d'activation (16, 17) et d'autre part contre les organes de fermeture (14) et
- en ce que les ressorts de compression (15) sont agencés de telle manière qu'ils exercent une force de fermeture sur les organes de fermeture (14), dans la position neutre de la soupape de direction, et en ce que, lors d'un déplacement de la soupape de direction (8) hors de la position neutre, un des ressorts de compression (15) s'appuie sans contrainte sur l'organe de fermeture (14), dès que la soupape d'échappement à siège (12, 13) correspondante est fermée.

2. Direction assistée selon la revendication 1, caractérisée en ce que les ressorts de compression (15) sont configurés en ressorts diaphragmes.

3. Direction assistée selon la revendication 2, caractérisée en ce que le poussoir d'activation (16, 17) est constitué de deux parties et en ce que l'une des parties (16) est en appui contre le ressort diaphragme, et est engagé sous pression dans l'autre partie (17), jusqu'à ce que la précontrainte souhaitée du ressort diaphragme soit atteinte pour la position neutre de la soupape de direction (8).
